# EUROPEAN PATENT APPLICATION

(11) **EP 4 737 839 A1**
(43) Date of publication of application: **06.05.2026**
(21) Application number: 24209345.8
(22) Date of filing: 29.10.2024
(51) Int. Cl.: F28D 1/00

(54) **A COOLING ASSEMBLY**

(71) Applicant: Valeo Electrification, 95892 Cergy Pontoise (FR)
(72) Inventor: FAJKIS, Michal, 32 050 Skawina (PL); PAWLAK, Damian, 32 050 Skawina (PL); MIKULEC, Denis, 32 050 Skawina (PL); MARTA, Dominik, 32 050 Skawina (PL)
(74) Representative: Valeo Powertrain Systems

(57) **Abstract**

The object of the invention is, among others, a cooling assembly (1) for a motor vehicle comprising:
- at least one first heat exchanger (100) comprising a pair of first manifolds (11, 12) extending in a first direction and a plurality of first tubes (15) stacked between the first manifolds (11,12),
- at least one second heat exchanger (200) comprising a pair of second manifolds (21, 22) extending in a second direction, and a plurality of second tubes (25) stacked between the second manifolds (21,22),
- at least one securing means (500), wherein the securing means (500) comprises at least one first component (510) located on the first heat exchanger (100) and at least one second component (520) protruding directly from the second manifold (21, 22) along the second direction, wherein the first component (510) is configured to be coupled with the second component (520) so that the second heat exchanger (200) is immobilized with respect to the first heat exchanger (100), wherein at least part of the second component (520) is unitary with at least one of the second manifolds (21, 22).

## Description

### FIELD OF THE INVENTION

The invention relates to a cooling assembly. In particular, the invention relates to the cooling assembly for a motor vehicle.

### BACKGROUND OF THE INVENTION

Heat exchangers in motor vehicles are usually responsible for thermal management of the powertrain, the air conditioning system, the power steering system, and other. This includes, for example, internal combustion vehicles, hybrid vehicles and electric vehicles, wherein the proper management of the heat can reflect on emissions, fuel or energy consumption, maximal driving range, etc.

The heat exchangers these days are usually made of metal components, such as aluminum assembled with synthetic components, such as plastic. The sub-components responsible for heat exchange, such as the heat exchanger core comprising tubes assembled with the headers are usually made of metal component, whereas the sub-components responsible for delivering or collecting the media, such as tanks, are usually made synthetic material.

The evolution of motor vehicles includes improving the existing solutions by supporting them with electronics, as well as implementing new solutions. Therefore, there is an increased interest in reducing the size and weight of particular sub-components of the motor vehicle. On the other hand, reducing the size of, for example, heat exchangers will directly influence the thermal performance of the whole motor vehicle.

The size of the heat exchanger may be reduced by implementing specific architectures that provide the same or better efficiency while using the smaller amount of space. As the result, the packaging in the motor vehicle may increase.

Nowadays, the reduction of weight of sub-components is one of the main factors that determines not only the final price of the vehicle, but also its total carbon footprint. The less material is used for production of, for example, synthetic sub-components, the less waste is produced both during vehicle's production and after vehicle's service life, whenever the sub- components of the vehicle are scrapped or re-cycled. Moreover, the less the vehicle weights, the smaller fuel consumption may be achieved. Consequently, the vehicle emits less pollution during its service life. Further, the lightweight cooling assemblies are good incentive for car manufacturers, because it may allow them to meet strict emissions requirements.

The car manufacturers constantly seek for more economical solutions that would fulfill the efficiency and weight requirements. Therefore, the research centers need to find a compromise between several factors in order to provide their customers with an ultimate, inexpensive, efficient and lightweight cooling assembly.

The existing solutions focus mainly on reducing the size of particular sub-components or decreasing the distance between the heat exchangers. Usually the headers of at least two heat exchangers are assembled in the close vicinity in order to reduce the total dimensions of created cooling module. The known cooling modules focus mainly on assembling process of two or three heat exchangers, wherein the particular sub-components provide means of attaching one heat exchanger to the other. However, none of the known documents suggests further improvements regarding cost and weight reduction.

Concerning the problems featured by the state of the art, it is desirable to create a cooling module comprising several heat exchangers, which would be of good feasibility and which would significantly reduce the production cost.

### SUMMARY OF THE INVENTION

The object of the invention is, among others, a cooling assembly for a motor vehicle comprising: at least one first heat exchanger comprising a pair of first manifolds extending in a first direction and a plurality of first tubes stacked between the first manifolds; at least one second heat exchanger comprising a pair of second manifolds extending in a second direction, and a plurality of second tubes stacked between the second manifolds, at least one securing means, wherein the securing means comprises at least one first component located on the first heat exchanger and at least one second component protruding directly from the second manifold along the second direction, wherein the first component is configured to be coupled with the second component so that the second heat exchanger is immobilized with respect to the first heat exchanger, wherein at least part of the second component is unitary with at least one of the second manifolds.

Advantageously, the second component leveled with the second manifold.

Advantageously, the second component protrudes beyond the outline of the second tubes, so that the first component is coplanar with the second tubes.

Advantageously, the first component at least partially intersects the second component.

Advantageously, the first component comprises a base portion projecting substantially in perpendicular to the first direction and the second direction, and an active portion projecting directly from the base portion and in parallel at least to the first direction.

Advantageously, the active portion is any of the lip, or at least one clip, or the combination of two.

Advantageously, the clip is configured to immobilize the second heat exchanger with respect to the first heat exchanger in a direction parallel to second direction and perpendicular to the second direction.

Advantageously, the lip is configured to immobilize the second heat exchanger with respect to the first heat exchanger at least in a direction parallel to second direction.

Advantageously, each of the second manifolds comprises a second header configured to receive an open ends of the second tubes, a second cover configured to form a fluid-tight connection with the second header.

Advantageously, the second component is located on the second header.

Advantageously, the second component is located on the second cover.

Advantageously, the second component comprises at least one receiving portion configured to receive at least part of the first component in a direction perpendicular to the second direction.

Advantageously, the receiving portion comprises an opening, the opening surrounding at least part of the first component.

Advantageously, the receiving portion is U-shaped portion, wherein free ends of said U-shaped portion are facing away from the second manifold.

Advantageously, the first heat exchanger is arranged with respect to the second heat exchanger so that the first manifolds are arranged perpendicularly with respect to the second manifolds.

Advantageously, the first heat exchanger is arranged with respect to the second heat exchanger so that the first manifolds are arranged in parallel with respect to the second manifolds.

Advantageously, the second heat exchanger is coupled with the first heat exchanger by moving the second heat exchanger in a direction perpendicular to the second direction.

### BRIEF DESCRITPTION OF DRAWINGS

Examples of the invention will be apparent from and described in detail with reference to the accompanying drawings, in which:

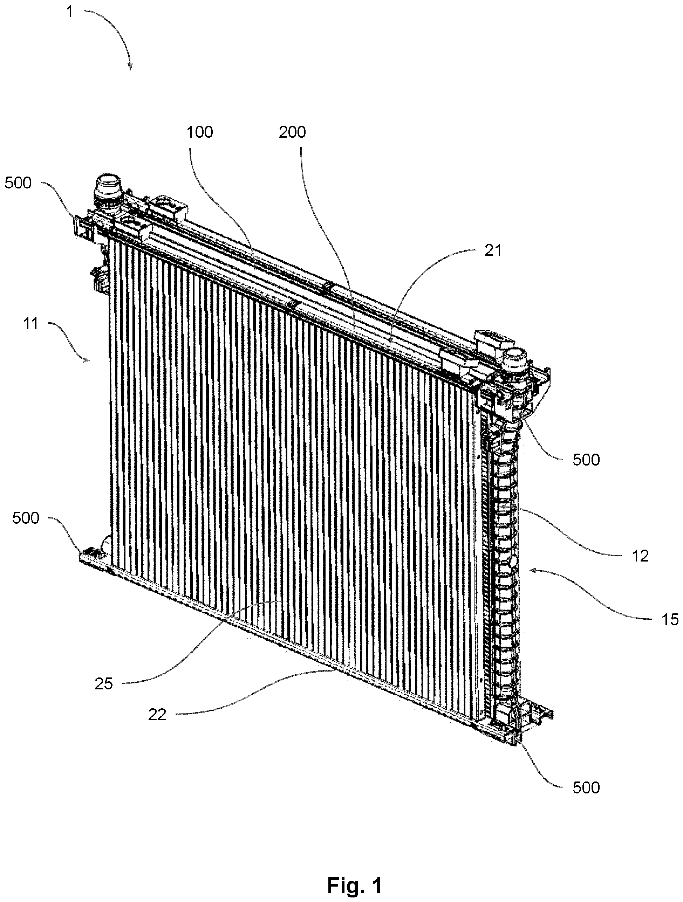

Fig.1 shows a perspective view of a cooling assembly.

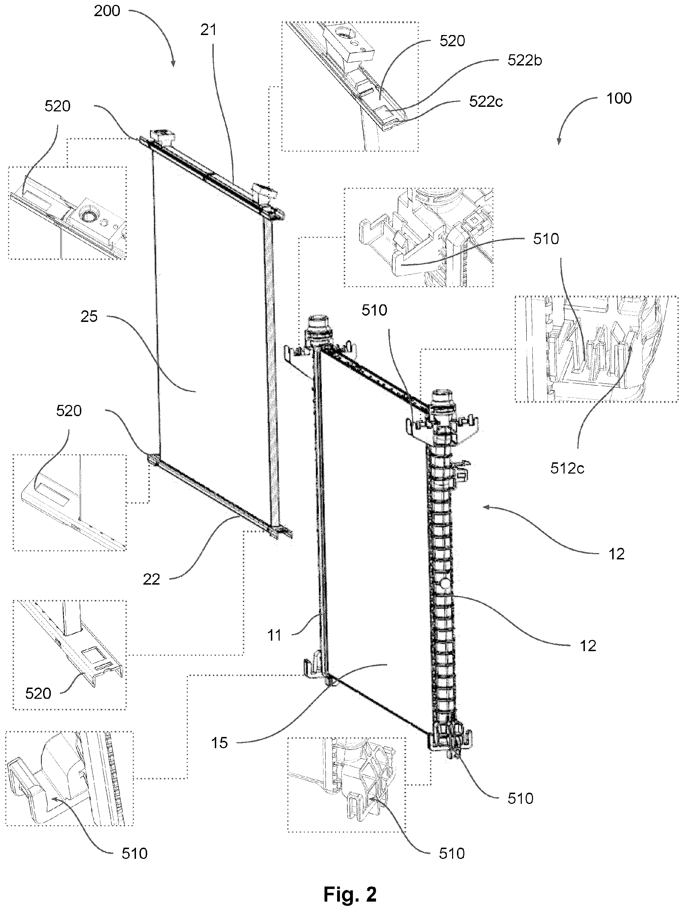

Fig. 2 shows an exploded view of the cooling assembly with detailed sections of securing means.

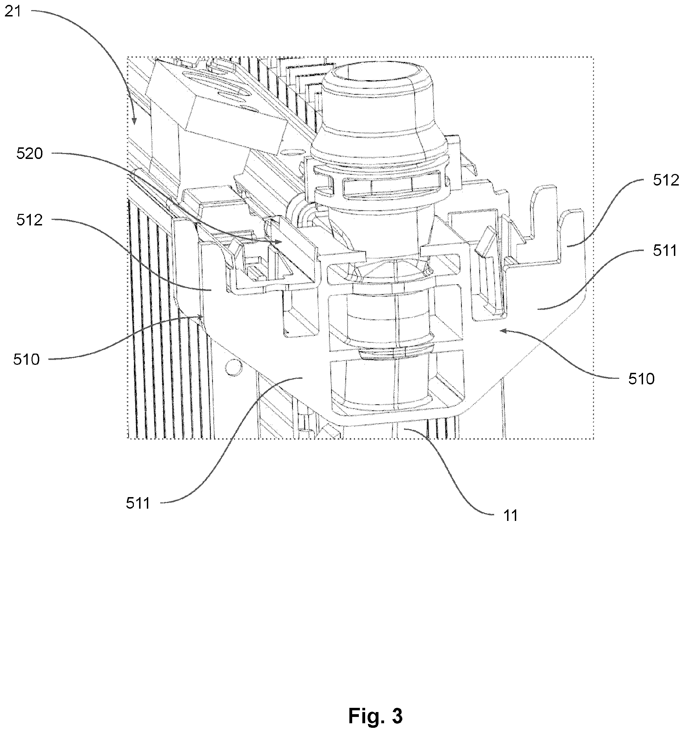

Fig. 3 shows a detailed perspective view of the cooling assembly with the securing means on the upper side thereof.

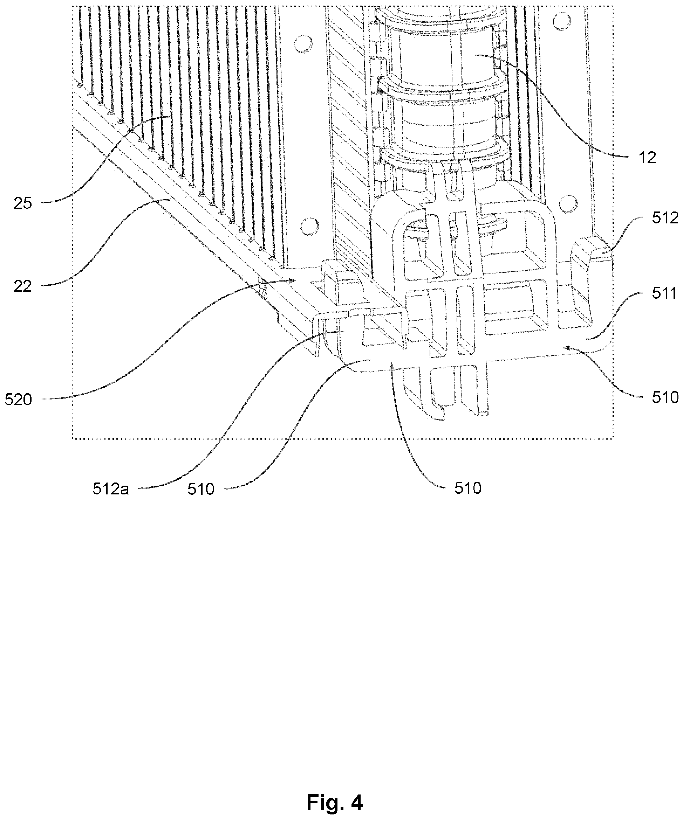

Fig. 4 shows a detailed perspective view of the cooling assembly with the securing means on the lower side thereof.

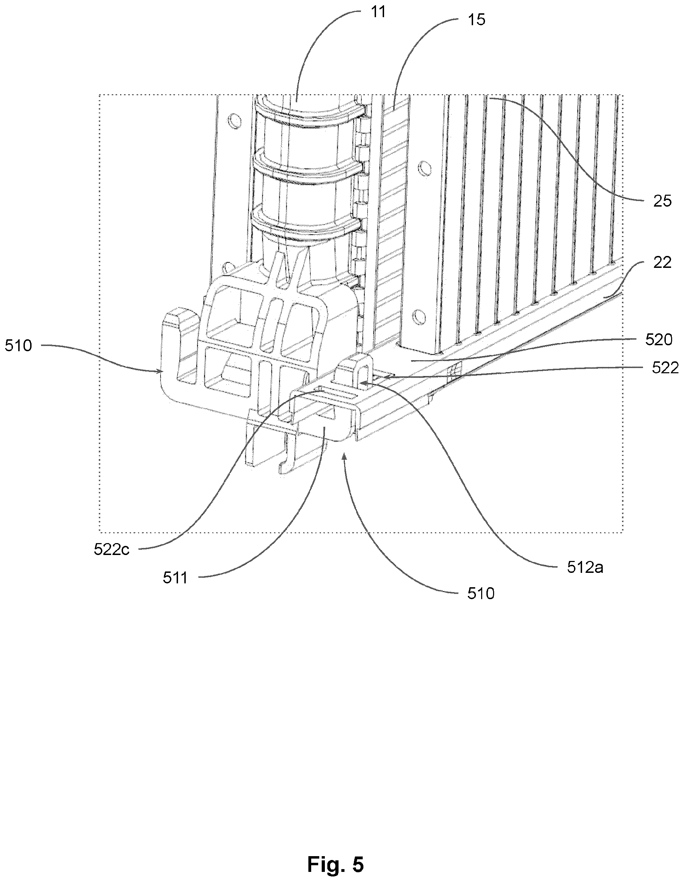

Fig. 5 shows another detailed perspective view of the cooling assembly with the securing means on the lower side thereof, wherein additional guiding means is present.

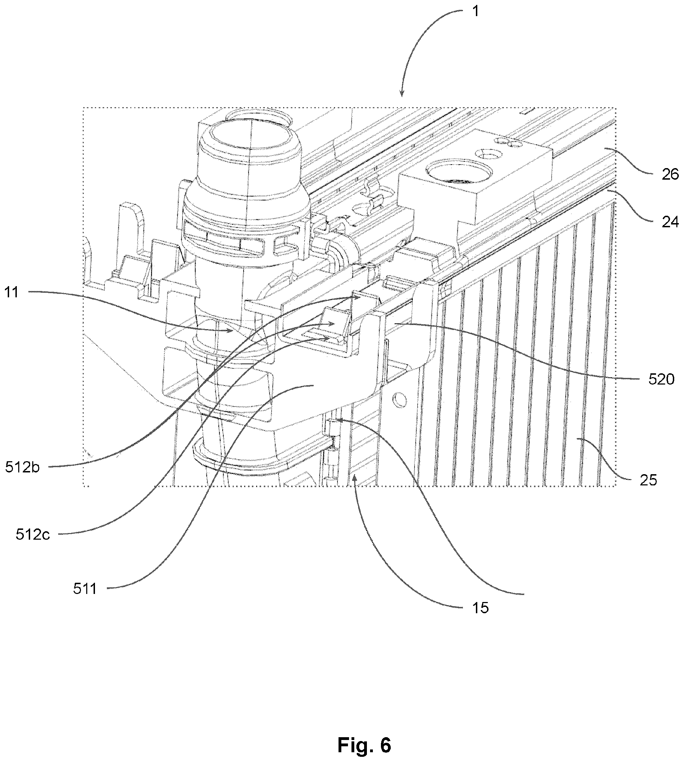

Fig. 6 shows a detailed perspective view of the cooling assembly with the securing means on the upper side thereof, wherein a second component comprises an opening for receiving a first component.

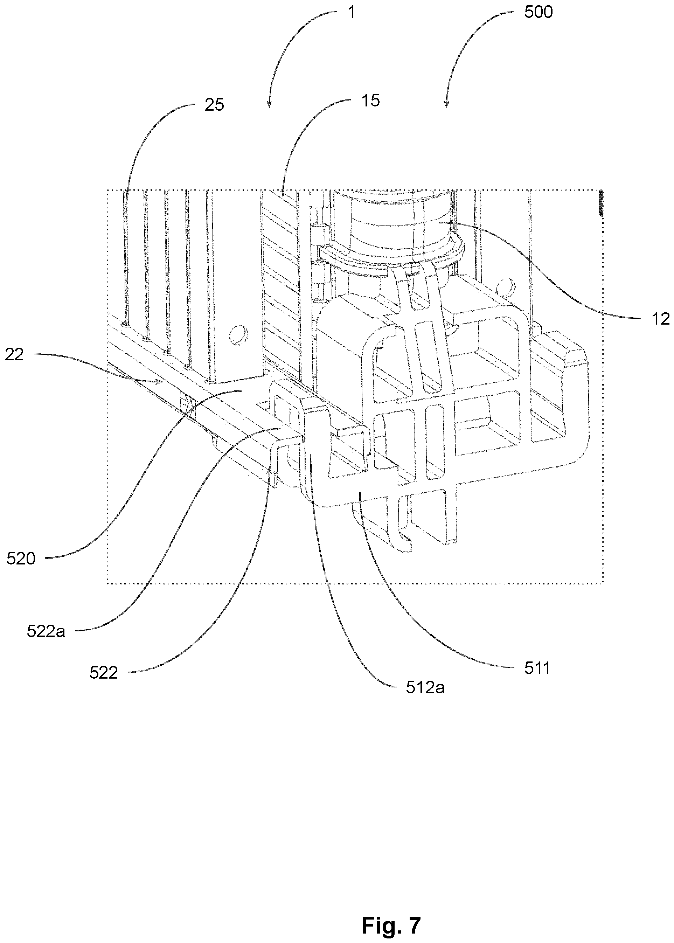

Fig. 7 shows a detailed perspective view of the cooling assembly with the securing means on the lower side thereof, wherein a second component comprises a U-shaped portion for receiving a first component.

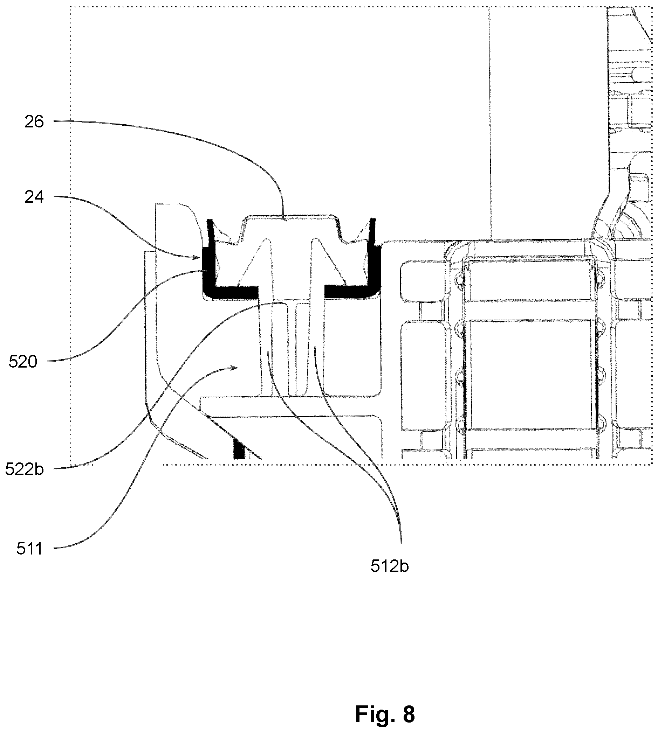

Fig.8 shows a cross sectional view of the cooling assembly with an exemplary arrangement of the securing means.

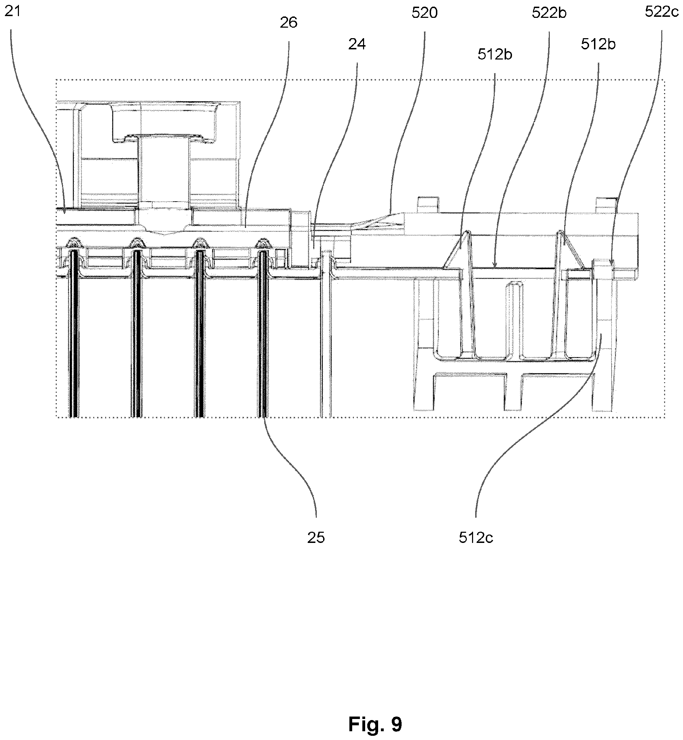

Fig.9 shows a different cross sectional view of the cooling assembly with another exemplary arrangement of the securing means.

### DETAILED DESCRIPTION OF THE INVENTION

The subject- matter of the invention relates to a cooling assembly 1) for a motor vehicle.

The motor vehicle may be regarded as a vehicle powered by conventional fuels, i.e. it comprises an internal combustion engine, as well as all types of hybrid vehicles and electric vehicles.

The cooling assembly 1 may be regarded as two or more heat exchangers that are arranged with respect to each other in the vehicle. Usually, the cores, or the tubes, which are responsible for heat exchange, are arranged one after the other with respect to oncoming ram air. It is essential to provide a cooling assembly with maximal performance, so the it is desired to provide as vast heat exchange area, as technically and economically possible. The packaging requirements from customers, as well as performance brings up the problem of arrangement of the heat exchangers in the cooling assembly 1, as well as the sequence of arranging them. One must bear in mind, that although the heat exchangers are arranged together, they may be connected to different loops. Alternatively, two or more heat exchangers may be connected fluidly directly, i.e. the fluid egressing from one heat exchanger may feed another, arranged subsequently thereto.

For the sake of the conciseness of the description of the invention, the cooling assembly 1 is described as the assembly of two heat exchangers. However, more heat exchangers forming the cooling assembly are also envisaged.

Accordingly, the cooling assembly 1 may comprise at least one first heat exchanger 100. The first heat exchanger 100 may be, for example, a radiator for circulation of the coolant fluid therein. The first heat exchanger 100 may comprise pair of first manifolds 11, 12 extending in a first direction. The first direction should be regarded as the main direction in which the fluid is intended to flow through either of the first manifolds 11, 12. In other words, both first manifolds 11, 12 extend axially.

The first heat exchanger 100 may further comprise a plurality of first tubes 15 stacked between the first manifolds 11, 12. The first tubes 15 provide a fluidal communication between one first manifold 11 and the other first manifold 12. The term stacked refers to two or more first tubes 15 arranged one after the other so that one open end of the first tubes 15 is inserted into one first manifold 11 and the other open end of the first tubes 15 is inserted into the other first manifold 12. When arranged together, the plurality of first tubes 15 may form a plane of the core of the first heat exchanger 100. The plane of this core may also be regarded as general plane of the first heat exchanger 100, herewith the first general plane.

Similarly, the cooling assembly may also comprise at least one second heat exchanger 200. The second heat exchanger 200 may be, for example, an air gas cooler or a condenser for circulation of the refrigerant fluid therein. The second heat exchanger 200 may comprise pair of second manifolds 21, 22 extending in a second direction. The second direction should be regarded as the main direction in which the fluid is intended to flow through either of the second manifolds 21, 22. In other words, both second manifolds 21, 22 extend axially.

The second heat exchanger 200 may further comprise a plurality of second tubes 25 stacked between the second manifolds 21, 22. The second tubes 25 provide a fluidal communication between one second manifold 21 and the other second manifold 22. The term stacked refers to two or more second tubes 25 arranged one after the other so that one open end of the second tubes 25 is inserted into one second manifold 21 and the other open end of the second tubes 25 is inserted into the other second manifold 22. When arranged together, the plurality of second tubes 25 may form a plane of the second heat exchanger 200 core. The plane of this core may also be regarded as general plane of the first heat exchanger 200, herewith the second general plane.

In order to attach the second heat exchanger 200 to the first heat exchanger 100 the cooling assembly 1 may comprise at least one securing means 500.

The securing means 500 is to be considered as the complementary elements on both heat exchangers 100, 200 that allow secure connection between the two.

Therefore, the securing means may comprise at least one first component 510 located on the first heat exchanger 100 and at least one second component 520 located on the second heat exchanger 200. The term "at least one" means in this case, that presence of any element that can be regarded as the first component 510 coupled to element that can be regarded as the second component 520 is part of the present invention, thus at least one first component 510 coupled to the second component 520 is sufficient. It should be thus noted that description may discuss one securing means 500 but more than one securing means, e.g. two or four are also envisaged.

The second component 520 may be protruding directly from the second manifold 21, 22 along the second direction. The second component 520 is thus unitary with at least one of the second manifolds 21, 22, meaning that the second component 520 is made in one piece with the second manifold 21, 22. In other words, there is a continuity of material between the second component 520 and the manifold 21, 22.

Accordingly, the first component 510 is configured to be coupled with the second component 520 so that the second heat exchanger 200 is immobilized with respect to the first heat exchanger 100. The features that enable such coupling are discussed in further paragraphs.

As already discussed, the second component 520 protrudes directly from the second manifold 21, 22 along the second direction, i.e. an axis of extension of the second manifold 21, 22. This way, the second component 520 remains within the outline of the second manifold 21, 22, when the axis of extension of the second manifold 21, 22 is pointing towards the reader. This way, the second component is 520 leveled with the second manifold 21, 22. The term level means that the second component 520 is at the same level as the second manifold 21, 22 with respect to the direction perpendicular to the second direction. In other words, level is determined in perpendicular to the axis of extension of the second manifold 21, 22, whereas elements being at the same level are arranged along (or on) said axis of extension of the second manifold.

Concerning the other point of reference, for example, the second tubes 25, the second component 520 may protrude beyond the outline of the second tubes 25. One must take into the account the terminal second tubes 25 of the plurality of second tubes 25. This way, the first component 510 is coplanar with the second tubes 25. In other words, the second component 510 is coplanar with the general plane of the second heat exchanger 200.

In order to restrict the relative movement between the heat exchangers 100, 200, the first component 510 at least partially intersects the second component 520. To do this, the first component comprises a base portion 511 projecting substantially in perpendicular to the first direction and the second direction, and an active portion 512 projecting directly from the base portion 511 and in parallel at least to the first direction. The base portion 511 provides a link between the active portion 512 and the first manifold 11, 12 from which it protrudes. The term intersect means that the first component 510 at least partially passes through the cross- section of the second component 520. This provides at least a support in the direction perpendicular to the second direction provided by the base portion 511 interacting with part of second component; and restricted movement at least in a direction parallel to the second direction provided by active portion 512 also interacting with part of the second component 520.

Accordingly, the active portion 512 may be in different forms, sizes and may interact with the second component in a different way.

For example, the active component may be a lip 512a. The lip 512a may be a substantially rectangular portion protruding from the base portion 511. The lip intersects the second component 520 to restrict the movement of the second heat exchanger 200 in relation to the first heat exchanger 100. The lip 512a is configured to immobilize the second heat exchanger 200 with respect to the first heat exchanger 100 at least in a direction parallel to second direction.

For example, the active component 512 may be at least one clip 512b. The clip 512b protrudes from the base portion 511 and towards the second component 520. The clip 512b usually comprises a substantially elastic, straight portion and a clipping means located on the end thereof. The clipping means may be conical or triangular, so that the insertion of the second component 520 is facilitated. In addition, such a shape enables the clip 512b to firmly secure the second heat exchanger 200 onto the first heat exchanger 100. In one of the variants, one clip 512b per one second component 520 may be sufficient, yet to provide an enhanced connection, two or more clips 512b per second component are preferred, as shown in the figures. The clip 512b is configured to immobilize the second heat exchanger 200 with respect to the first heat exchanger 100 in a direction parallel to second direction and perpendicular to the second direction.

Further, it is also envisaged that the first component comprises both lip 512a, and the clip 512b. This variant is not shown in the figures.

In order to further facilitate the engagement of the heat exchangers 100, 200, the first component 510 may comprise guiding means 512c that help to arrange the second heat exchanger 200 relatively to the first heat exchanger 100 during the assembly process. Wen assembled, the guiding means 512c may play the same role as the lip 512a.

Concerning the location of the second component 520 on any of the second manifolds 21, 22, there are multiple possible arrangements.

The second manifolds 21, 22 may further comprise a second header 24 configured to receive an open ends of the second tubes 25, and a second cover 26 configured to form a fluid-tight connection with the second header 24. In such assembly, a means for closing the profile of the second header 24- second cover 26 may be present and may have different forms (e.g. end baffle). As the second header 24 and the second cover 26 form the manifolds 21, 22, it is natural that the second component may be located on any of them. The second header 24 and second cover 26 may refer both to one second manifold 21 and the other second manifold 22 but as they are functionally similar, no references differing these elements between the second manifolds 21, 22 is required.

Accordingly, the second component 520 may be located on the second header 24. Generally, this allows more space for the second tubes 25 as the second headers 24 on of the second manifolds 21, 22 may be distanced from each- other, thereby increasing the length of the second tubes 25 and consequently, the heat exchange surface.

Accordingly, the second component 520 may be located on the second cover 26. This allows providing the securing means 500 when the packaging requirements are strict by allowing the first component to be shifted away from conflicting area of the cooling assembly 1 (e.g. the piping, shrouds, etc.).

By all means, providing the second component 520 facilitates the manufacturing process, as it may be created along with the second header 24 or the second cover 25. Naturally, it also reduces cost.

In another alternative, 520 may be located on both second cover 26 and the second header 24. This arrangement may be adapted when the robustness requirements are very high.

Accordingly, the second component 520 may at least one receiving portion 522 configured to receive at least part of the first component 510 in a direction perpendicular to the second direction. The receiving portion 522 actively interacts with the active component 512 of the first component 510. The receiving portion 522 may correspond to the shape of the active component 512 to facilitate the insertion thereof during the assembly process.

Therefore, the receiving portion 522 may be in a form of an opening 522b. The opening 522b is surrounding at least part of the first component 510. In more detail, the active component is surrounding corresponding active component 512.

Alternatively, the receiving portion 522 is U-shaped portion 522a. In fact the U-shaped portion is to be regarded as the edge of the receiving portion that is in contact with the corresponding active portion 512. The free ends of said U-shaped portion 522a shall thus be facing away from the second manifold 21, 22. In other words, the free ends of the U-shaped portion 522a may be regarded as terminal ends of the second manifold 21,22.

Further, the second component 520 may comprise another aperture 522c configured to receive guiding means 512c. The aperture 522c may accompany the presence of U-shaped portion 522a or the opening 522b.

The presence of securing means 500 allows different arrangements of the heat exchangers 100, 200 in the cooling module 1. For instance, the first heat exchanger 100 may arranged with respect to the second heat exchanger 200 so that the first manifolds 11, 12 are arranged perpendicularly with respect to the second manifolds 21, 22. I other words, the second heat exchangers 200 is rotated relatively to the first heat exchanger 100 by ninety degrees. As consequence, the second tubes 25 are also arranged with respect to the first tubes 15 at the right angle.

Alternatively, the presence of securing means 500 allows the first heat exchanger 100 to be arranged with respect to the second heat exchanger 200 so that the first manifolds 11, 12 are arranged in parallel with respect to the second manifolds 21, 22. In this arrangement, the active component 512 is required to be perpendicular to the first direction of the first manifolds 11, 12 and parallel to the second tubes 25. This variant is also envisaged, yet not shown in figures.

Accordingly, the second heat exchanger 200 is coupled with the first heat exchanger 100 by moving the second heat exchanger 200 in perpendicular to the second direction. This may be achieved no matter which aforementioned configuration of the heat exchangers 100, 200 is selected.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A cooling assembly (1) for a motor vehicle comprising:
- at least one first heat exchanger (100) comprising a pair of first manifolds (11, 12) extending in a first direction and a plurality of first tubes (15) stacked between the first manifolds (11,12),
- at least one second heat exchanger (200) comprising a pair of second manifolds (21, 22) extending in a second direction, and a plurality of second tubes (25) stacked between the second manifolds (21,22),
- at least one securing means (500), wherein the securing means (500) comprises at least one first component (510) located on the first heat exchanger (100) and at least one second component (520) protruding directly from the second manifold (21, 22) along the second direction, wherein the first component (510) is configured to be coupled with the second component (520) so that the second heat exchanger (200) is immobilized with respect to the first heat exchanger (100), wherein at least part of the second component (520) is unitary with at least one of the second manifolds (21, 22).

2. The cooling assembly (1) according to claim 1, wherein the second component (520) leveled with the second manifold (21, 22).

3. The cooling assembly (1) according to any of the preceding claims, wherein the second component (520) protrudes beyond the outline of the second tubes (25), so that the first component (510) is coplanar with the second tubes (25).

4. The cooling assembly (1) according to any of the preceding claims, wherein the first component (510) at least partially intersects the second component (520).

5. The cooling assembly (1) according to any of the preceding claims, wherein the first component comprises a base portion (511) projecting substantially in perpendicular to the first direction and the second direction, and an active portion (512) projecting directly from the base portion (511) and in parallel at least to the first direction.

6. The cooling assembly (1) according to claim 5, wherein the active portion (512) is any of the lip (512a), or at least one clip (512b), or the combination of two (512a), (512b).

7. The cooling assembly (1) according to claim 6, wherein the clip (512b), is configured to immobilize the second heat exchanger (200) with respect to the first heat exchanger (100) in a direction parallel to second direction and perpendicular to the second direction.

8. The cooling assembly (1) according to claim 6,wherein the lip (512a) is configured to immobilize the second heat exchanger (200) with respect to the first heat exchanger (100) at least in a direction parallel to second direction.

9. The cooling assembly (1) according to any of the preceding claims, wherein each of the second manifolds (21, 22) comprises a second header (24) configured to receive an open ends of the second tubes (25), a second cover (26) configured to form a fluid-tight connection with the second header (24).

10. The cooling assembly (1) according to claim 9, wherein the second component (520) is located on the second header (24) or the second component (520) is located on the second cover (26).

11. The cooling assembly (1) according to any of the preceding claims, wherein the second component (520) comprises at least one receiving portion (522) configured to receive at least part of the first component (510) in a direction perpendicular to the second direction.

12. The cooling assembly (1) according to claim 11, wherein the receiving portion (522) comprises an opening (522b), the opening (522b) surrounding at least part of the first component (510).

13. The cooling assembly (1) according to claim 11, wherein the receiving portion (522) is U-shaped portion (522a), wherein free ends of said U-shaped portion (522a) are facing away from the second manifold (21,22).

14. The cooling assembly (1) according to any of the preceding claims, wherein the first heat exchanger (100) is arranged with respect to the second heat exchanger (200) so that the first manifolds (11, 12) are arranged perpendicularly with respect to the second manifolds (21, 22).

15. The cooling assembly (1) according to any of the preceding claims, wherein the second heat exchanger (200) is coupled with the first heat exchanger (100) by moving the second heat exchanger (200) in a direction perpendicular to the second direction.
